# EUROPÄISCHE PATENTSCHRIFT

(11) **EP 3 405 398 B1**
(45) Veröffentlichungstag und Bekanntmachung des Hinweises auf die Patenterteilung: **13.04.2022**
(21) Anmeldenummer: 17700572.5
(22) Anmeldetag: 19.01.2017
(51) Int. Cl.: B65B 31/00, G01M 3/22, G01M 3/32, G01M 3/40, G01N 21/77, G01N 21/90, B65B 25/00, B65B 9/04, B65B 31/02

(54) **VERFAHREN ZUR DICHTIGKEITSPRÜFUNG EINER FERTIGGESTELLTEN VERPACKUNG**
METHOD OF TESTING THE TIGHTNESS OF A COMPLETED PACKAGE
PROCÉDÉ DE TEST DE L'ÉTANCHÉITÉ D'UN EMBALLAGE FINI

(30) Priorität: 20.01.2016 DE 102016200749; 09.03.2016 DE 102016203876; 11.03.2016 DE 102016204085; 17.05.2016 DE 102016208441; 27.05.2016 DE 102016209207; 20.06.2016 EP 16175264; 11.07.2016 DE 102016212574; 15.07.2016 DE 102016213009; 15.07.2016 DE 102016213010
(43) Veröffentlichungstag der Anmeldung: 28.11.2018
(73) Patentinhaber: GEA Food Solutions Germany GmbH, 35216 Biedenkopf-Wallau (DE)
(72) Erfinder: STEFFEN, Andreas, 35116 Hatzfeld (DE); MÜLLER, Sven, 35216 Biedenkopf (DE)
(74) Vertreter: Kutzenberger Wolff & Partner
(86) Internationale Anmeldenummer: PCT/EP2017/051066
(87) Internationale Veröffentlichungsnummer: WO 2017/125484

(56) Entgegenhaltungen:
- EP-A1- 0 277 458
- EP-A2- 0 586 894
- WO-A2-2011/012730
- DE-A1-102014 202 596
- US-A- 3 744 210
- US-A1- 2007 212 792

## Beschreibung

Die vorliegende Erfindung betrifft ein Verfahren zur Überprüfung der Dichtigkeit einer fertiggestellten Verpackung, die eine Gasatmosphäre aufweist.

Lebensmittelverpackungen erhöhen die Haltbarkeit von Lebensmitteln, aber nur, wenn sie dicht sind. Dabei ist insbesondere die Verbindungsstelle, insbesondere die Siegelnaht, die zwei Enden einer Folie oder zwei Folien miteinander verbindet, beispielsweise zwischen einer Verpackungsmulde, in der sich das Lebensmittel befindet und einer Oberfolie, die an die Verpackungsmulde gesiegelt ist, eine Schwachstelle, weil beispielsweise sie verschmutzt sein kann und/oder die erforderliche Temperatur, der erforderliche Druck und/oder die benötigte Siegelzeit zumindest lokal nicht eingehalten wird und/oder ungewollte Falten in Oberfolie und/oder Verpackungsmulde bestehen und/oder die Verpackungsfolie unzureichend ist und/oder falsche Folien miteinander gepaart sind. Solche Verpackungen sind dann von Anfang an oder nach einiger Zeit undicht und dadurch die Haltbarkeit des Verpackungsgutes reduziert. Es kommt aber auch vor, dass das Verpackungsmaterial selbst oder die Verbindungsstelle bei der weiteren Bearbeitung nach der Siegelung oder beim weiteren Handling der Verpackung beschädigt und dadurch undicht wird.

WO 2011/012730 A2 und US 34744210 A beschreiben Verfahren gemäß dem Oberbegriff des Anspruchs 1. DE 102014202596 A1, EP 0586894 A2 und EP 0277458 A1 beschreiben Verfahren zur Prüfung der Dichtigkeit einer Verpackung. US 2007/212792 A1 beschreibt ein Verfahren zur Messung der Sauerstoffkonzentration eines Verpackungsmaterials.

Es besteht seit langem deshalb ein Bedarf, solche fehlerhaften Verpackungen zerstörungsfrei zu erkennen.

Gelöst wird die Aufgabe mit einem Verfahren zur Überprüfung der Dichtigkeit einer fertiggestellten Verpackung gemäß Anspruch 1, Die zu diesem Gegenstand der vorliegenden Erfindung gemachten Ausführungen gelten für die anderen Gegenstände der vorliegenden Erfindung gleichermaßen und umgekehrt. Die Offenbarung zu diesem Gegenstand der vorliegenden Erfindung kann mit anderen Gegenständen der vorliegenden Erfindung kombiniert werden und umgekehrt. Des Weiteren werden Verpackungen für ein Verpackungsgut beschrieben, insbesondere ein Lebensmittel oder ein sonstiges sensibles, beispielsweise steriles Verpackungsgut, das vorzugsweise in einer Kunststofffolie, die auch mehrlagig und aus verschiedenen Werkstoffen bestehend ausgeführt sein kann, im Wesentlichen gasdicht, d.h. hermetisch abgeschlossen, eingepackt wird. Die Verpackung weist vorzugsweise eine tiefgezogene Verpackungsmulde auf, die mit dem Verpackungsgut befüllt und dann vorzugsweise mit einem Deckel, insbesondere einer Deckelfolie verschlossen wird. Vorzugsweise weist die Verpackung eine Gasatmosphäre auf, d.h. es befindet sich Gas in der Verpackung. Auch bei einer Vakuumverpackung oder einer Skinverpackung befindet sich eine gewisse Gasatmosphäre in der Verpackung. Die Deckelfolie wird an die Verpackungsmulde gesiegelt. Vor dem Siegeln wird in der Verpackungsmulde vorzugsweise ein Gasaustausch vorgenommen. Dafür wird zunächst die Luft in der Verpackungsmulde abgesaugt und dadurch ein Unterdruck in der Verpackungsmulde erzeugt. Danach wird vorzugsweise das Austauschgas, insbesondere ein Inertgas, beispielsweise CO₂ und/oder N₂ in die Verpackungsmulde eingeleitet und dadurch die Sauerstoffkonzentration in der Verpackungsmulde abgesenkt, wodurch sich beispielsweise die Haltbarkeit des verpackten Lebensmittels erhöht. Es ist aber auch möglich die in der Verpackungsmulde befindliche Gasatmosphäre mit dem Austauschgas aus der Verpackung zu spülen, also die Gasatmosphäre in der Verpackungsmulde ohne vorheriges Erzeugen eines Unterdrucks in der Verpackungsmulde zu ändern. Weiterhin ist es möglich lediglich einen Unterdruck in der Verpackung zu erzeugen und dadurch das vorhandene Gasvolumen und/oder beispielsweise den Sauerstoffpartialdruck zu reduzieren. Der Gasaustausch/Unterdruck kann in und/oder vor der Siegelstation und vor bzw. vorzugsweise nach dem Befüllen der Verpackungsmulde mit Verpackungsgut stattfinden. Der Fachmann versteht, dass die Verpackung auch durch einen sogenannten vertikalen oder horizontalen Flow-Wrapper hergestellt werden kann.

Erfindungsgemäß wird die fertiggestellte, d.h. geschlossene Verpackung, in einer Druckkammer einer Gasatmosphäre ausgesetzt, d.h. von einer Gasatmosphäre zumindest teilweise umgeben, deren Druck und Zusammensetzung sich von dem Druck und/oder der Zusammensetzung der Gasatmosphäre in der fertiggestellten Verpackung unterscheidet. Für den Fall, dass dabei eine Siegelnaht undicht sein sollte, strömt Gas in die Verpackung und/oder aus der Verpackung, wodurch sich der Druck in der Verpackung und/oder mindestens die Konzentration einer Komponente der Gasatmosphäre in der Verpackung verändern. Diese Veränderung kann durch eine Druckänderungsmessung und/oder Gaskonzentrationsmessungen festgestellt werden, die dann auf eine undichte Naht oder eine undichte Folienbahn hindeuten.

Die Druckkammer ist bezogen auf die Transportrichtung der jeweiligen Verpackung stromabwärts von der Siegelstation vorgesehen. Sie kann aber auch Teil der Siegelkammer sein. Vorzugsweise ist sie auch stromabwärts von der Vereinzelung der jeweiligen Verpackung vorgesehen. Die Druckkammer kann aber auch alternativ oder zusätzlich irgendwo in der Lieferkette vorgesehen werden, um festzustellen, ob eine Verpackung undicht war oder undicht geworden ist, bevor sie beispielsweise an einen Endkunden verkauft wird. Die Druckkammer kann eine oder mehrere Verpackungen gleichzeitig aufnehmen und einem bestimmten Druck aussetzen.

Vorzugsweise wird jede hergestellte Verpackung auf ihre Dichtigkeit überprüft, wobei die Überprüfung zerstörungsfrei erfolgt.

Der Druck in der Druckkammer kann ein im Vergleich zum Druck in der Verpackung Über- und/oder Unterdruck sein. Über- und Unterdruck können im Wechsel angelegt werden, so dass die Verpackung atmet. Dadurch wird eine Veränderung der Atmosphäre in der Verpackung schneller stattfinden. Für die Messung wird die Verpackung in die Druckkammer transportiert und dann dem veränderten Druck ausgesetzt. Dabei umgibt die Verpackung vorzugsweise eine Gasatmosphäre mit einer Zusammensetzung, die sich vorzugsweise von der Zusammensetzung der Gasphase in der Verpackung unterscheidet. Befindet sich beispielsweise in der Verpackung eine Gasatmosphäre, die im Vergleich zu Luft mit einem Inertgas, beispielsweise N₂ und/oder CO₂ angereichert ist, kann als Gasatmosphäre in der Druckkammer Luft verwendet werden. Dasselbe gilt für eine mit Sauerstoff angereicherte Gasatmosphäre in der Verpackung oder wenn in der Verpackung ein Unterdruck herrscht. Auch in diesem Fall kann beispielsweise Luft als die die Verpackung umgebende Gasatmosphäre in der Druckkammer verwendet werden.

Vorzugsweise wird in der Druckkammer ein Überdruck erzeugt. Bei einer Undichtigkeit strömt dann das Gas aus der Druckkammer in die Verpackung hinein. Alternativ oder zusätzlich wird in der Druckkammer ein Unterdruck erzeugt. Bei einer Undichtigkeit strömt dann das Gas aus der Verpackung heraus in die Druckkammer hinein. Alternativ oder zusätzlich wird kein konstanter, sondern ein alternierender Druck angelegt. Der Druck kann dabei im Überdruckbereich, im Unterdruckbereich und/oder zwischen Über- und Unterdruck alternieren.

Die Änderung der Konzentration einer Komponente der Gasatmosphäre in der Verpackung wird dabei zerstörungsfrei gemessen, indem beispielsweise eine elektromagnetische Strahlung, die von Verpackung, insbesondere deren Gasatmosphäre, oder einem darin vorgesehenen Gaskonzentrationsindikatorsubstanzpunkt emittiert wird, analysiert wird. Dafür kann im Inneren der Verpackung beispielsweise ein Gaskonzentrationsindikatorsubstanzpunkt vorgesehen sein, der eine Substanz aufweist, bei der sich eine chemische und/oder physikalische Eigenschaft mit der Konzentration eines Gases, beispielsweise Sauerstoff, verändert. Beispielsweise ändert sich deren Farbe und/oder die Wellenlänge und/oder die Phase deren ausgesendeten Lichts. Beispielsweise wird die Substanz mit sichtbarem Licht, vorzugsweise von einer LED, insbesondere impulsartig bestrahlt und dadurch stimuliert/angeregt und sendet dabei und/oder nach der Bestrahlung Fluoreszenzlicht aus, das eine andere, insbesondere größere Wellenlänge als das Anregungslicht hat. Gemessen wird beispielsweise die Zeitverschiebung infolge der veränderten, insbesondere größeren Wellenlänge. Diese Veränderung kann mit einem Sensor nachgewiesen werden. Der Fachmann versteht, dass ein Punkt eine diskrete Stelle ist, die eine beliebige Form aufweisen kann. Beispielsweise kann der Gaskonzentrationsindikatorsubstanzpunkt linien-, kreisring- und/oder kreisförmig sein oder eine sonstige beliebige Form aufweisen oder auch mehrteilig sein. Vorzugsweise weist der Punkt in der Transportrichtung der Ober- bzw. Unterfolie eine Länge von 8 - 14, vorzugsweise 10 - 12 mm auf. Die Erstreckung senkrecht dazu beträgt vorzugsweise 8 - 14, vorzugsweise 10 - 12 mm.

Erfindungsgemäß erfolgt während der Messung eine Druck- und/oder Temperaturkompensation. Bei diesem Gegenstand der vorliegenden Erfindung wird vor, gleichzeitig und/oder nach der Messung mindestens eines Bestandteils der Atmosphäre der Gasphase in der Verpackung die Temperatur des Gaskonzentrationsindikatorsubstanzpunkts, und/oder der Verpackungsmulde, und/oder der Oberfolie, und/oder der Atmosphäre in der Verpackung und/oder des Verpackungsguts gemessen. Besonders bevorzugt wird mindestens eine dieser Messungen und/oder ein berechneter Wert, beispielsweise ein Mittelwert, aus mehreren dieser Messungen dazu eingesetzt das von dem Sensor gemessene Signal zu bearbeiten, beispielsweise um einen bei einer bestimmten Temperatur gemessenen Kalibrierungswert auf die aktuell gemessene Temperatur umzurechnen.

Vorzugsweise erfolgt die Temperaturmessung berührungslos, beispielsweise mit einem Infrarotsensor, und insbesondere zerstörungsfrei.

Alternativ oder zusätzlich wird der Druck in der Verpackung und/oder des den Gaskonzentrationsindikatorsubstanzpunkt umgebenden Raum mit einem Sensor gemessen und die Messungen beispielsweise dazu eingesetzt das von dem Sensor gemessene Signal zu bearbeiten, beispielsweise um einen bei einem bestimmten Druck gemessenen Kalibrierungswert auf den aktuell gemessenen Druck umzurechnen.

Alternativ oder zusätzlich wird die Verpackung mit einem Laserstrahllicht bestrahlt und die zurückstrahlenden elektromagnetischen Wellen analysiert, deren Frequenz, Amplitude und/oder Phase sich durch die Konzentration mindestens einer Komponente in der Gasatmosphäre verändert.

Der Gaskonzentrationsindikatorsubstanzpunkt wird vorzugsweise innerhalb der Verpackung auf der Unterfolie und/oder Oberfolie und/oder auf einer separaten Einlage in der Verpackung, beispielsweise einem L-Board, angeordnet. Beispielsweise bei Verpackungen, in denen Unterdruck und/oder ein verminderter Partialdruck, beispielsweise von Sauerstoff herrscht, kann unter verbesserten Umgebungsbedingungen gemessen werden, um den gesteigerten Anforderungen an die Messempfindlichkeit bei der geringen zu messenden Konzentration der Atmosphäre Genüge zu tun, indem beispielsweise zumindest der Hintergrund und/oder die Umgebung des Gaskonzentrationsindikatorsubstanzpunkts besonders gleichmäßig gestaltet wird, beispielsweise indem die Unter- und/oder Oberfolie, auf der der Gaskonzentrationsindikatorsubstanzpunkt angeordnet ist, zumindest im Bereich um den Gaskonzentrationsindikatorsubstanzpunkt mit konstantem Kontrast, beispielsweise einfarbig gestaltet ist. Der Gaskonzentrationsindikatorsubstanzpunkt kann auch auf einer Einlage, beispielsweise einem Einlegeblatt, einer Kunststofffolie wie einem Herkunftsnachweis oder Qualitätssiegel und/oder einem Under-/Interleaver-Blatt, das typischerweise im Slicer eingebracht wird, aufgedruckt sein, wodurch der Gaskonzentrationsindikatorsubstanzpunkt zudem sicher vom Produkt separiert ist und eine geringere Gefahr für ungewollte Kontamination besteht. Auch hier ist es bei Verpackungen mit Unterdruck bevorzugt, dass zumindest die Umgebung des Gaskonzentrationsindikatorsubstanzpunkts gleichförmig, also beispielsweise mit konstantem Kontrast, beispielsweise einfarbig gestaltet ist.

Erfindungsgemäß wird die Konzentration mindestens einer Komponente der Gasatmosphäre in der Verpackung mindestens zweimal zeitlich versetzt gemessen. Es können dabei zwei Sensoren vorhanden sein, die örtlich voneinander beabstandet sind, wobei sich die Druckkammer vorzugsweise zwischen den Sensoren befindet , oder alternativ ein Sensor in der Druckkammer und ein Sensor stromaufwärts und/oder stromabwärts davon vorgesehen ist. Die Messung kann erfolgen während sich die jeweilige Verpackung bewegt, beispielsweise während eines Formatvorzuges und/oder während sie stillsteht, beispielsweise während sich die jeweilige Verpackung in der Druckkammer befindet. Beispielsweise kann ein Sensor in der Siegelstation oder bezogen auf die Bewegung der jeweiligen Verpackung stromabwärts davon und/oder vorzugsweise stromaufwärts von der Druckkammer vorgesehen sein. Alternativ oder zusätzlich kann ein Sensor, der die Konzentration mindestens einer Komponente in der Gasatmosphäre der Verpackung analysiert in der Druckkammer und/oder stromabwärts davon vorgesehen sein.

Zur Analyse mindestens einer Konzentration einer Komponente der Gasatmosphäre in der Verpackung, wird die Verpackung vorzugsweise einer elektromagnetischen Strahlung ausgesetzt. Diese Strahlung erfolgt vorzugsweise nur temporär.

Gemäß einer bevorzugten Ausführungsform wird der Druck in der Kammer gemessen und zur Analyse einer Leckage in der Verpackung herangezogen. Verändert sich dieser Druck schlagartig, deutet dies auf eine Undichtigkeit hin. Der gemessene Druck kann auch bei der Messung der Konzentration einer Komponente in der Gasphase wie oben beschrieben berücksichtigt werden.

Des Weiteren wird eine Versorgungskette mit einer Verpackungsmaschine mit einer Siegelstation beschrieben, die eine Verpackung hermetisch verschließt, wobei die Versorgungskette eine Druckkammer aufweist, in der die Verpackung einer Gasatmosphäre ausgesetzt wird, deren Druck und Zusammensetzung sich von dem Druck und/oder der Zusammensetzung der Gasatmosphäre in der fertiggestellten Verpackung unterscheidet.

Die zu dieser Versorgungskette gemachten Ausführungen gelten für die anderen Versorgungsketten gleichermaßen und umgekehrt. Die Versorgungskette beginnt mit der Verpackungsmaschine und endet beim Verbraucher. An jeder Stelle in dieser Versorgungskette kann eine Druckkammer vorgesehen sein, in der die Verpackung einer Gasatmosphäre ausgesetzt wird, deren Druck und Zusammensetzung sich von dem Druck und/oder der Zusammensetzung der Gasatmosphäre in der fertiggestellten Verpackung unterscheidet. So kann an jeder Stelle in der Versorgungskette festgestellt werden, ob die Gasatmosphäre in der Verpackung die gewünschte Zusammensetzung hat. Bei der Verpackungsmaschine kann es sich um einen sogenannten Thermoformer oder um einen sogenannten Traysealer oder um einen vertikalen oder horizontalen Flowwrapper und/oder eine sogenannte Kammermaschine und/oder Kammerbandmaschine handeln. Die erfindungsgemäße Verpackungsmaschine weist eine Siegelstation auf, mit der beispielsweise eine Oberfolie auf die Verpackungsmulde gesiegelt wird, nachdem diese mit einem Verpackungsgut, insbesondere einem Lebensmittel befüllt worden ist. Die Siegelstation kann aber auch die Enden einer Folie miteinander verbinden und/oder das Ende eines Verpackungsbeutels verschließen, beispielsweise beim sogenannten Siegelrandbeutel.

Vorzugsweise ist in der Versorgungskette eine Druckkammer vorgesehen, in der die Verpackung einer Gasatmosphäre ausgesetzt wird, deren Druck und Zusammensetzung sich von dem Druck und/oder der Zusammensetzung in der Gasatmosphäre in der fertiggestellten Verpackung unterscheidet. Ist die Verpackung undicht, ändert sich dadurch die Zusammensetzung der Gasatmosphäre in der Verpackung und/oder der Druck in der Verpackung. Beides kann einzeln oder gemeinsam durch einen oder mehrere entsprechende(n) Sensor(en) ermittelt werden, die sich bezogen auf eine Transportrichtung der jeweiligen Verpackung in der Druckkammer, stromaufwärts von der Druckkammer und/oder stromabwärts davon befinden können. Bezüglich der Sensoren wird ausdrücklich auf die oben gemachte Offenbarung verwiesen.

Vorzugsweise weist die Druckkammer einen Drucksensor auf. Dieser Drucksensor kann zum Nachweis einer Leckage in der Verpackung dienen. Alternativ oder zusätzlich kann der Sensor aber auch dazu eingesetzt werden den Druck in der Druckkammer zu steuern. Dieser muss angehoben oder abgesenkt werden, wenn sich die Verpackung in der Kammer befindet. Vorzugsweise wird mit dem Signal des Drucksensors eine Überdruck- und/oder Unterdruckquelle gesteuert. Der gemessene Druck kann auch bei der Messung der Konzentration einer Komponente in der Gasphase wie oben beschrieben berücksichtigt werden.

Vorzugsweise weist die Verpackungsmaschine, insbesondere die Druckkammer einen Temperatursensor auf.

Es wird vor, gleichzeitig und/oder nach der Messung mindestens eines Bestandteils der Atmosphäre der Gasphase in der Verpackung die Temperatur des Gaskonzentrationsindikatorsubstanzpunkts, und/oder der Verpackungsmulde, und/oder der Oberfolie, und/oder der Atmosphäre in der Verpackung und/oder des Verpackungsguts gemessen. Besonders bevorzugt wird mindestens eine dieser Messungen und/oder ein berechneter Wert, beispielsweise ein Mittelwert, aus mehreren dieser Messungen dazu eingesetzt das von dem Sensor gemessene Signal zu bearbeiten, beispielsweise um einen bei einer bestimmten Temperatur gemessenen Kalibrierungswert auf die aktuell gemessene Temperatur umzurechnen.

Vorzugsweise erfolgt die Temperaturmessung berührungslos, beispielsweise mit einem Infrarotsensor, und insbesondere zerstörungsfrei.

Alternativ oder zusätzlich wird der Druck in der Verpackung und/oder des den Gaskonzentrationsindikatorsubstanzpunkt umgebenden Raum mit einem Sensor gemessen und die Messungen beispielsweise dazu eingesetzt das von dem Sensor gemessene Signal zu bearbeiten, beispielsweise um einen bei einem bestimmten Druck gemessenen Kalibrierungswert auf den aktuell gemessenen Druck umzurechnen.

Vorzugsweise nimmt die Druckkammer mehrere Verpackungen gleichzeitig auf, insbesondere ein ganzes Format. Ein Format im Sinne der Erfindung ist die Anzahl an Verpackungen, die bei einem Takt der Verpackungsmaschine gleichzeitig um eine Taktlänge weiter entlang der Verpackungsmaschine transportiert werden.

Vorzugsweise ist die Druckkammer mehrteilig, insbesondere zweiteilig vorgesehen, wobei sich vorzugsweise mindestens ein Teil relativ zu dem anderen Teil bewegen kann. Dadurch kann die Druckkammer geöffnet und geschlossen werden. Besonders bevorzugt weist die Druckkammer ein vertikal bewegliches Unterteil auf, das nach unten verschoben wird, wenn die Verpackung(en) in die Druckkammer verbracht wird/werden und dann wieder nach oben verschoben wird, um die Druckkammer zu schließen.

Vorzugsweise ist die Druckkammer stromabwärts von der Vereinzelung innerhalb der Versorgungskette vorgesehen. Vorzugsweise wird jede Verpackung durch eine Druckkammer gefahren, bevor sie in größeren Gebinden zusammengefasst wird. Vorzugsweise wird die Verpackung noch einmal nach ihrem Transport in der Druckkammer auf Dichtigkeit untersucht.

Vorzugsweise wird der Druck in der Verpackung, insbesondere nach deren Verschluss bei der Messung ermittelt und bei der Messung berücksichtigt. Alternativ oder zusätzlich kann der Druck in der Packung in der Siegelstation, in der Siegelkammer und/oder in dem Siegelwerkzeug gemessen, werden, insbesondere nach abgeschlossenem Begasen und solange die Verpackung noch offen ist.

Für die Messung des Drucks in der geschlossenen Verpackung kann beispielsweise eine drucksensitive Indikatorsubstanz oder ein Dehnmessstreifen eingesetzt werden.

Insbesondere für den Fall, dass ein Format gleichzeitig auf Dichtigkeit untersucht wird, wird die Oberfolie zwischen den Siegelnähten von zwei benachbarten Verpackungen vorzugsweise perforiert oder angeschnitten, damit im Fall einer Undichtigkeit hinreichend viel Gas in die Verpackung dringen oder aus der Verpackung entweichen kann. Dafür ist vorzugsweise stromaufwärts von der Druckkammer und/oder in der Druckkammer ein entsprechendes Mittel vorgesehen. Alternativ wird der Längsschneider oder der Querschneider der Verpackungsmaschine stromaufwärts von der Druckkammer vorgesehen und/oder ein Schneider, der die Oberfolie zumindest partiell durchtrennt.

Im Folgenden wird die Erfindung anhand der Figuren erläutert. Diese Erläuterungen sind lediglich beispielhaft. Die Erläuterungen gelten für alle Gegenstände der vorliegenden Erfindung gleichermaßen.
- **Figur 1**: zeigt die erfindungsgemäße Verpackungsmaschine
- **Figuren 2 und 3**: zeigt Details der Druckkammer und von deren Umfeld

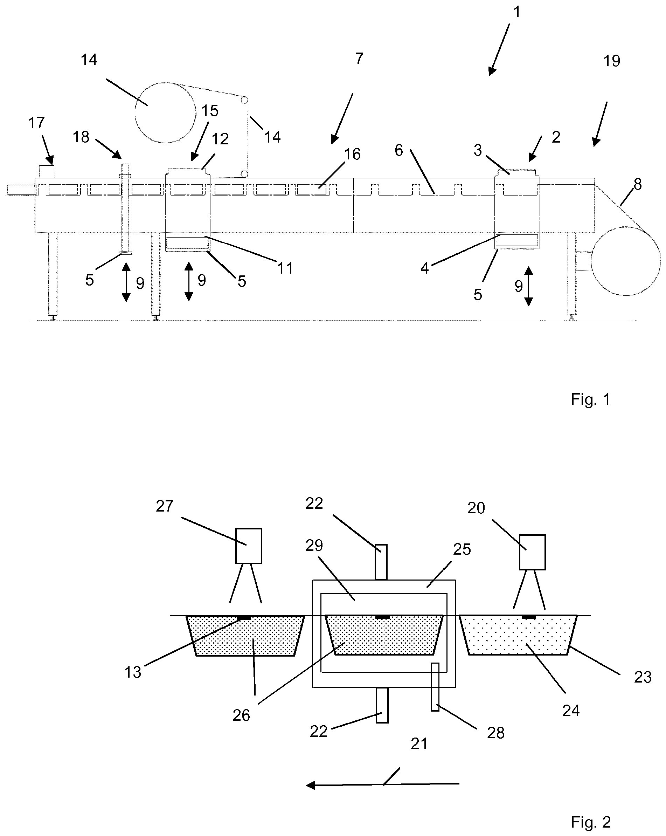

**Figur 1** zeigt eine Verpackungsmaschine 1, die eine Tiefziehstation 2, eine Füllstation 7 sowie eine Siegelstation 15 aufweist. Eine Kunststofffolienbahn 8, die sogenannte Unterfolienbahn, wird von einer Vorratsrolle abgezogen und, vorzugsweise taktweise, entlang der Verpackungsmaschine hiervon rechts nach links transportiert. Bei einem Takt wird die Folienbahn um eine Formatlänge weitertransportiert. Dafür weist die Verpackungsmaschine zwei Transportmittel (nicht dargestellt), in dem vorliegenden Fall jeweils zwei Endlosketten auf, die rechts und links von der Folienbahn angeordnet sind. Jede Endloskette weist Haltemittel auf, die jeweils mit einer Kante der Folienbahn zusammenwirken. Sowohl am Anfang als auch am Ende der Verpackungsmaschine ist für jede Kette jeweils mindestens ein Zahnrad vorgesehen, um das die jeweilige Kette umgelenkt wird. Mindestens eines dieser Zahnräder ist angetrieben. Die Zahnräder im Einlaufbereich 19 und/oder im Auslaufbereich können miteinander, vorzugsweise durch eine starre Welle, verbunden sein. Jedes Transportmittel weist eine Vielzahl von Klemmmitteln auf, die die Unterfolienbahn 8 im Einlaufbereich klemmend ergreifen und die Bewegung des Transportmittels auf die Unterfolienbahn 8 übertragen. Im Auslaufbereich der Verpackungsmaschine wird die klemmende Verbindung zwischen dem Transportmittel und der Unterfolienbahn wieder gelöst. In der Tiefziehstation 2, die über ein Oberwerkzeug 3 und ein Unterwerkzeug 4 verfügt, das die Form der herzustellenden Verpackungsmulde aufweist, werden die Verpackungsmulden 6 in die Unterfolienbahn 8 eingeformt. Das Unterwerkzeug 4 ist auf einem Hubtisch 5 angeordnet, der, wie durch den Doppelpfeil symbolisiert wird, vertikal verstellbar ist. Vor jedem Folienvorschub wird das Unterwerkzeug 4 abgesenkt und danach wieder angehoben. Im weiteren Verlauf der Verpackungsmaschine werden die Verpackungsmulden dann in der Füllstation 7 mit dem Verpackungsgut 16 gefüllt. In der sich daran anschließenden Siegelstation 19, die ebenfalls aus einem Oberwerkzeug 12 und einem vertikal verstellbaren Unterwerkzeug 11 besteht, wird eine Oberfolienbahn auf die Verpackungsmulde gesiegelt. Auch in der Siegelstation werden das Oberwerkzeug und/oder das Unterwerkzeug vor und nach jedem Folientransport abgesenkt bzw. angehoben. Auch die Oberfolienbahn 14 kann tiefgezogen und/oder in Transportmitteln geführt sein bzw. von Transportketten transportiert werden, wobei sich diese Transportmittel dann nur von der Siegelstation und ggf. stromabwärts erstrecken. Ansonsten gelten die Ausführungen, die zu den Transportmitteln der Unterfolienbahn gemacht wurden. In der Siegelstation findet vorzugsweise ein Gasaustausch statt, um beispielsweise den Sauerstoffgehalt der Atmosphäre in der Verpackung zu reduzieren. Im weiteren Verlauf der Verpackungsmaschine werden auch die fertiggestellten Verpackungen vereinzelt, was mit dem Schneidwerkzeugen 17, 18 erfolgt. Das Schneidwerkzeug 18 ist in dem vorliegenden Fall ebenfalls mit einer Hubeinrichtung 9 anhebbar bzw. absenkbar. Der Fachmann erkennt, dass bei einem Takt vorzugsweise mehrere Verpackungsmulden tiefgezogen, befüllt und verschlossen werden.

Die Verpackungsmaschine ist Teil einer Versorgungskette, mit der Lebensmittel oder sensible Güter verpackt werden. Diese Versorgungskette, beispielsweise die Verpackungsmaschine, weist eine Druckkammer 25 auf, mit der eine oder mehrere Verpackungen 23 mit einem Druck belastet werden können, der sich von dem Druck in der Verpackung unterscheidet. Dafür ist in der Druckkammer 25 vorzugsweise eine Gasatmosphäre 29 vorgesehen, die sich in ihrer Zusammensetzung von der Gasatmosphäre 24 in der Verpackung nach deren Verschluss, insbesondere Siegelung, unterscheidet. Durch die Druckdifferenz zwischen dem Druck in der Druckkammer und dem Druck im Verpackungsinneren wird Gas aus der Druckkammer in die Verpackung gedrückt und/oder aus der Verpackung gesaugt, wodurch sich die Gasatmosphäre in der Verpackung verändert. Alternativ oder zusätzlich kann sich auch der Druck in der Verpackung ändern. Eine oder beide Veränderungen können durch entsprechende Sensoren 10, 20, 27 erfasst werden. Sobald eine derartige Veränderung von den Sensoren erfasst worden ist, weiß der Betreiber oder eine entsprechende Steuerung, dass die Verpackung undicht ist und diese Verpackung kann dann manuell oder automatisch aus der Versorgungskette ausgeschleust werden.

**Figur 2** zeigt eine erste Ausführungsform der Versorgungskette. In dem vorliegenden Fall ist die Druckkammer 25 Teil der Verpackungsmaschine und die Verpackungen 23 werden in die Druckkammer 25 verfahren, bevor diese vereinzelt worden sind. Vorzugsweise arbeitet die Verpackungsmaschine taktweise und mit jedem Takt werden eine oder mehrere Verpackungen in die Druckkammer verfahren. Dafür ist die Druckkammer vorzugsweise zweiteilig vorgesehen und insbesondere das Unterteil kann vertikal verschoben werden, um der Verpackungsmulde Platz für den Transport in die Druckkammer zu machen. Die Druckkammer weist mindestens einen Anschluss 22, hier zwei Anschlüsse 22, an eine Unter- und/oder Überdruckquelle 22 auf. Mittels dieser Quelle 22 kann der Druck in der Druckkammer, der die jeweilige Verpackung 23 umgibt so erhöht oder abgesenkt werden, dass er sich von dem Druck in der Verpackung unterscheidet. Für die Steuerung des Drucks in der Druckkammer ist vorzugsweise ein Drucksensor 28 vorgesehen, der den Druck in Druckkammer misst und mit dessen Signal die Druckquelle 22 gesteuert oder geregelt wird. Der Sensor 28 kann jedoch auch als Leckageprüfung eingesetzt werden. In dem vorliegenden Fall sind stromaufwärts beziehungsweise stromabwärts von der Kammer 25 Sensoren 20, 27 vorgesehen, die mindestens die Konzentration einer Komponente in der Gasphase in der jeweiligen Verpackung 23 messen. Dafür ist in jeder Verpackung ein Sensorspot 13 vorgesehen, der sich chemisch und/oder physikalisch in Abhängigkeit der Konzentration mindestens einer Substanz in der Gasatmosphäre der Verpackung verändert. In dem vorliegenden Fall wird dieser Sensorspot durch eine Lichtquelle angeregt und die von dem Sensorspot abgestrahlte elektromagnetische Strahlung lässt Rückschlüsse über die Konzentration der zu messenden Substanz zu. Dadurch, dass die Konzentration diese Substanz stromaufwärts und stromabwärts von der Druckkammer ermittelt wird, kann aufgrund der Differenz festgestellt werden, ob sich in der Druckkammer eine Veränderung der Konzentration der untersuchten Substanz ergibt. Sollte dies der Fall sein, lässt dies Rückschlüsse auf eine Undichtigkeit der Verpackung zu.

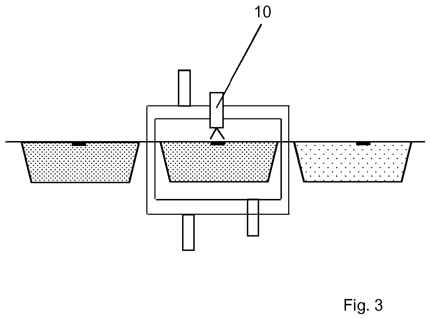

Bei der in **Figur 3** dargestellten Ausführungsform ist in der Druckkammer 25 selbst ein Sensor vorgesehen, mit dem die Konzentration mindestens einer Substanz in der Gasatmosphäre der Verpackung bestimmt werden kann. Das Messverfahren kann dabei beispielsweise dem gemäß Figur 2 beschriebenen Messverfahren entsprechen. Durch mehrere zeitlich versetzte Messungen der Konzentration während des Abdrückens der Verpackung kann wiederum eine Veränderung der zu messenden Konzentration erfasst werden und damit eine Undichtigkeit der Verpackung festgestellt werden.

Der Fachmann versteht, dass der Sensor 10, beispielsweise mit dem Sensor 27, stromabwärts von der Druckkammer und/oder mit dem Sensor 20 stromaufwärts von der Druckkammer kombiniert werden kann. In diesem Fall ist es ausreichend, wenn der Sensor 10 lediglich eine einzige Messung vornimmt.

### Bezugszeichenliste:

- 1: Verpackungsmaschine
- 2: Tiefziehstation
- 3: Oberwerkzeug der Tiefziehstation
- 4: Unterwerkzeug der Tiefziehstation
- 5: Hubtisch, Träger eines Werkzeugs der Siegel-, Tiefziehstation und/oder der Schneideinrichtung
- 6: Verpackungsmulde
- 7: Füllstation
- 8: Unterfolienbahn
- 9: Hubeinrichtung
- 10: Dritter Sensor
- 11: Unterwerkzeug der Siegelstation
- 12: Oberwerkzeug der Siegelstation
- 13: Sensorspot
- 14: Oberfolie
- 15: Siegelstation
- 16: Verpackungsgut
- 17: Längsschneider
- 18: Querschneider
- 19: Einlaufbereich
- 20: Erster Sensor
- 21: Transportrichtung der Verpackungen
- 22: Druck- Vakuumquelle
- 23: fertiggestellte Verpackung
- 24: Atmosphäre in der Verpackung nach der Siegelung
- 25: Druckkammer, Unter- und/oder Überdruckkammer
- 26: Atmosphäre in der Verpackung während und/oder nach der Druckbelastung
- 27: Zweiter Sensor
- 28: Drucksensor
- 29: Gasatmosphäre in der Druckkammer

## Patentansprüche

1. Verfahren zur Überprüfung der Dichtigkeit einer fertiggestellten Verpackung (23), die eine Gasatmosphäre (24) aufweist, wobei die fertiggestellte Verpackung in einer Druckkammer (25) einer Gasatmosphäre (29) ausgesetzt wird, deren Druck und/oder Zusammensetzung sich von dem Druck und/oder der Zusammensetzung der Gasatmosphäre in der fertiggestellten Verpackung unterscheidet, wobei die Druckkammer (25) Teil der Verpackungsmaschine ist, **dadurch gekennzeichnet, dass** die Konzentration mindestens einer Komponente der Gasatmosphäre in der Verpackung mindestens zweimal zeitlich versetzt gemessen wird, wobei die Messungen örtlich voneinander beabstandet sind, wobei zwei Sensoren (20,27) vorhanden sind, die örtlich voneinander beabstandet sind, wobei sich die Druckkammer (25) zwischen den Sensoren (20,27) befindet, oder alternativ ein Sensor (10) in der Druckkammer (25) und ein Sensor stromaufwärts (20) und/oder stromabwärts (27) davon vorgesehen ist, und wobei während der Messung eine Druck- und/oder Temperaturkompensation beim Messwert erfolgt, um einen bei einem bestimmten Druck und/oder einer bestimmten Temperatur gemessenen Kalibrierungswert auf den aktuell gemessene Druck und/oder die aktuell gemessene Temperatur umzurechnen.

2. Verfahren nach Anspruch 1, **dadurch gekennzeichnet, dass** die Verpackung in der Druckkammer (25) mit einem im Vergleich zum Druck in der Verpackung Über- und/oder Unterdruck belastet wird.

3. Verfahren nach einem der voranstehenden Ansprüche, **dadurch gekennzeichnet, dass** die Verpackung einer elektromagnetischen Strahlung ausgesetzt wird.

4. Verfahren nach einem der voranstehenden Ansprüche, **dadurch gekennzeichnet, dass** der Druck in der Druckkammer gemessen wird.

## Claims

1. Method of testing the tightness of a completed package (23), which has a gas atmosphere (24), wherein the completed package is exposed in a pressure chamber (25) to a gas atmosphere (29), the pressure and/or composition of which differs from the pressure and/or composition of the gas atmosphere in the completed package, wherein the pressure chamber (25) is part of the packaging machine, **characterized in that** the concentration of at least one component of the gas atmosphere in the package is measured at least twice, at different times, wherein the measurements are at locations a distance from one another, wherein there are two sensors (20, 27), which are at locations a distance from one another, wherein the pressure chamber (25) is located between the sensors (20, 27), or alternatively one sensor (10) is provided in the pressure chamber (25) and one sensor is provided upstream (20) and/or downstream (27) thereof, and wherein during the measuring a pressure and/or temperature compensation is performed on the measured value, in order to convert a calibration value measured at a specific pressure and/or a specific temperature to the currently measured pressure and/or the currently measured temperature.

2. Method according to Claim 1, **characterized in that** the package in the pressure chamber (25) is subjected to a positive and/or negative pressure in comparison with the pressure in the package.

3. Method according to either of the preceding claims, **characterized in that** the package is exposed to electromagnetic radiation.

4. Method according to one of the preceding claims, **characterized in that** the pressure in the pressure chamber is measured.

## Revendications

1. Procédé de contrôle de l'étanchéité d'un emballage fini (23) qui comporte une atmosphère gazeuse (24), l'emballage fini étant exposé dans une chambre de pression (25) à une atmosphère gazeuse (29) dont la pression et/ou la composition diffèrent de la pression et/ou de la composition de l'atmosphère gazeuse située dans l'emballage fini, la chambre de pression (25) faisant partie de la machine d'emballage,
**caractérisé en ce que** la concentration d'au moins un composant de l'atmosphère gazeuse dans l'emballage est mesurée au moins deux fois avec un décalage temporel, les mesures étant espacées spatialement l'une de l'autre, deux capteurs (20, 27) étant prévus et espacés spatialement l'un de l'autre, la chambre de pression (25) se trouvant entre les capteurs (20, 27) ou en variante un capteur (10) étant prévu dans la chambre de pression (25) et un capteur étant prévu en amont (20) et/ou en aval (27) de celle-ci et, pendant la mesure, une compensation de pression et/ou de température étant effectuée à la valeur mesurée afin de convertir une valeur d'étalonnage, mesurée à une pression déterminée et/ou une température déterminée, en la pression actuellement mesurée et/ou en la température actuellement mesurée.

2. Procédé selon la revendication 1, **caractérisé en ce que** l'emballage dans la chambre de pression (25) est soumis à une surpression et/ou une dépression par rapport à la pression dans l'emballage.

3. Procédé selon l'une des revendications précédentes, **caractérisé en ce que** l'emballage est exposé à un rayonnement électromagnétique.

4. Procédé selon l'une des revendications précédentes, **caractérisé en ce que** la pression dans la chambre de pression est mesurée.
